# EUROPEAN PATENT SPECIFICATION

(11) **EP 2 714 432 B1**
(45) Date of publication and mention of the grant of the patent: **19.09.2018**
(21) Application number: 12730632.2
(22) Date of filing: 24.05.2012
(51) Int. Cl.: B60C 11/12, B60C 11/03

(54) **WINTER TYRE**
WINTERREIFEN
PNEU D'HIVER

(30) Priority: 27.05.2011 IT PD20110174; 07.07.2011 US 201161505181 P
(43) Date of publication of application: 09.04.2014
(73) Proprietor: Pirelli Tyre S.p.A., 20126 Milano (IT)
(72) Inventor: COLOMBO, Gianfranco, 20126 Milano (IT); BOLZONI, Roberto, 20126 Milano (IT)
(74) Representative: Susanetto, Carlo
(86) International application number: PCT/IB2012/052601
(87) International publication number: WO 2012/164449

(56) References cited:
- EP-A1- 1 782 970
- EP-A1- 2 072 286
- JP-A- H0 338 409
- JP-A- 2003 118 322
- US-A1- 2010 084 062
- US-A1- 2010 218 867

## Description

The present invention relates to a winter tyre comprising a tread band whose blocks are duly provided with sipes configured to improve the performance of the tyre on wet and dry surfaces, in particular conditions of use, without thereby impairing its road-holding properties on a snow-covered or icy surface.

In a typical structural configuration, a winter tyre comprises a tread band provided with a plurality of circumferential and transverse grooves delimiting a corresponding plurality of blocks, on each of which a plurality of sipes is in turn obtained. Typically, sipes extend within the block in a radial reference plane substantially perpendicular to the tread surface of the tyre and their presence is one of the more evident features which distinguish, from a visual point of view as well, a winter tyre from conventional summer tyres.

The function of the sipes is to provide further edges to grip a snow-covered surface and internally to retain a certain quantity of snow which, as is known, has a higher level of friction with the snow on the road surface than that of the tread band itself.

It is known, however, that the presence of sipes on the blocks of the tread band substantially reduces the performance of the tyre if the road surface, whether wet or dry, is free from snow.

This deterioration in performance is considered to be due to the fact that the various portions of the block separated by the sipes, as they enjoy a relative freedom of reciprocal movement, in particular in the radial direction, are unable adequately to withstand the tangential (or "shearing") stresses exerted on the tread band during acceleration, cornering or braking, leading to a deformation of said block and a reduction of its contact surface with the road surface.

Sipes may be obtained on the blocks in different configurations, possibly as a function of the performance required of the tyre, and may in particular be provided with a configuration having a straight profile or a configuration having an undulating profile, for instance of a zigzag type.

JP 2003-118322, which shows the preamble of claim 1, JPH0338409 A, US 2010/084062 and US 2010/0218867 disclose exemplary winter tyres according to the prior art.

It will be appreciated that in this context the term "sipe" means a recess provided in a tread band portion and having a width of between 0.1 and 1.5 mm and a depth of between 1 and 15 mm, and the term "groove" means a recess provided in a tread band portion and having a width greater than 1.5 mm and a depth greater than 5 mm.

In the present specification and in the appended claims, the term "substantially straight", when it refers to a sipe or to a profile of a block portion surface determined by the sipe, means a curve which may depart from a perfectly straight condition at most by a measurement equal to one twentieth of its overall longitudinal extension.

Moreover, in the present specification and in the appended claims, it is said that a surface has an "undulating" profile when an alternating series of concave and convex portions can be identified thereon. In this way, any section of the surface gives rise to a generically curved line formed by an alternating series of first and second sections of opposite concavity.

As a particular case of an undulating surface, said concave and convex portions may be formed by a series of differently lying incident planes, wherein the section line is represented by a polygonal chain in the form of a zigzag line comprising first and second straight sections oriented in different directions.

Moreover, in the case of a surface with an undulating profile, each first and second section line section has a "apex" understood as the most distant point from the reference plane along which the sipe extends, and each concave or convex portion has a "crest", i.e. a line formed by all the apexes of the section line sections identified as the section plane varies.

Applicant has observed that undulating sipes have undeniable advantages with respect to simple straight sipes, including the fact that, with the same longitudinal extension, they have a greater linear development than a straight configuration and therefore a gripping edge on a snow-covered surface which is more extensive and has a greater snow retention capacity.

A further advantage of the configuration with an undulating profile with respect to a straight configuration is that it has a greater resistance to shearing stresses parallel to the longitudinal direction of the sipe as a result of the reciprocal interference between the block portions separated by the sipe.

Applicant has also verified that the provision of sipes with an undulating profile makes it possible, all other conditions remaining the same, to obtain tyres whose road-holding performance is generally better when cornering than that of sipes with a straight profile.

Applicant has nevertheless observed that in conditions of extreme stress the shearing stresses may cause severe abrasions of the blocks at the location of the sipes which to some extent compromise the advantages listed above and are detrimental to their visual impact. These drawbacks were in particular observed during a test to assess the lateral road-holding behaviour of the tyres, wherein a vehicle at high speed is subject to sharp and sudden swerving (what is known as the "lane change" test on a dry road surface) when said tests were conducted with particularly heavy sports vehicles.

Applicant verified that that these abrasions were caused by the reciprocal interference of the concave and convex portions of the respective block portions separated by each sipe.

Applicant nevertheless realized that one of the reasons for the high level of abrasion encountered could be the excessive range of movement of the block portions in the longitudinal direction, due to the geometric configuration of the sipes with an undulating profile which enables a kind of longitudinal and transverse stretching of said block portions of the "accordion" or "bellows" type.

Applicant therefore realized that in order to remedy or at least to limit this drawback, the potential relative movement of the block portions separated by the sipe needed to be limited, particularly in its longitudinal direction.

Applicant lastly found that the relative longitudinal and transverse movement of the block portions separated by the sipe could be limited by providing the radially internal part of the sipe with a substantially straight profile, able to prevent an "accordion" or "bellows" effect with respect to the block portions defined by sipes with an undulating profile.

In particular, according to its first aspect, the invention relates to a tyre according to claim 1.

Applicant considers that, with sipes shaped in this way, the block portions separated by said sipes are less mobile with respect to one another in the longitudinal direction, thereby reducing the adverse effects of their reciprocal interference in the case of extreme shearing stresses. At the same time, continuing to provide the radially external part of the sipe with an undulating profile retains all the advantages of an undulating configuration, in terms of lateral road-holding and performance on snow-covered surfaces.

As a result of this configuration, each block portion section faces in the circumferential direction or in the axial direction, so as to exert its road-holding ability on a snow-covered road surface in the best possible way both when turning and when braking or accelerating.

Moreover, by dimensioning the length of said first and second sections it is possible to modulate the different road-holding of the tyre in the most appropriate way to circumferential or axial shearing stresses, giving priority to one or the other depending on the intended type of use.

The present invention, in its above-mentioned aspect, may include at least one of the preferred features described below.

Said sipe preferably extends in said block in a longitudinal direction which is parallel to a plane tangential to said tread surface and is inclined with respect both to an axial direction and to a circumferential direction that are defined in said tread band.

In this way, the action to limit the relative displacement of said block portions in the longitudinal direction may take place, at least with respect to one component thereof, both in cases of shearing stresses in a circumferential direction due for instance to abrupt braking, and in cases of shearing stresses in an axial direction due for instance to sudden turning.

Said sipe preferably opens, at its opposite longitudinal ends, into a pair of grooves delimiting said block, so as to extend through said block from side to side.

In particular, it is preferable for said first surface to be defined, in the longitudinal direction, in a central region of said sipe and to be interposed between flat surfaces which are formed at the opposite longitudinal ends of said sipe.

Moreover, said flat surfaces are preferably coplanar with said second surface.

In a preferred embodiment, said sipe extends in said block in a longitudinal direction parallel to a plane tangential to said tread surface, said first surface comprising a series of concave portions and convex portions each of which has a respective crest, the distance of which from a reference plane comprising said second surface decreases progressively from said top to said intermediate depth.

For each of said concave portions and said convex portions, the distance of said crest from said reference plane is preferably zero at said intermediate depth.

In one embodiment, for each of said concave portions and said convex portions, the distance of said crest from said reference plane decreases linearly from said top to said intermediate depth.

This facilitates the operation to remove the tyre from the mould.

Said concave portions and said convex portions are preferably arranged on opposite sides of said reference plane.

Said concave portions and said convex portions are more preferably arranged symmetrically with respect to said reference plane.

In a preferred embodiment, said intermediate depth is spaced from said top by between approximately 1.5 mm and approximately 10 mm.

In a preferred embodiment, said intermediate depth is spaced from said bottom by between approximately 2.5 mm and approximately 5 mm.

Said intermediate depth is preferably spaced from said bottom by approximately 4 mm.

This provides an optimum balance between the road-holding properties of the first surface having an undulating profile and the longitudinal extension limiting properties of the second surface having a substantially straight profile.

Said sipe preferably extends in said block in a longitudinal direction and said first surface extends in said longitudinal direction for a distance of between approximately 50% and approximately 100% of the entire longitudinal extent of said sipe.

Other advantages and features of the invention will become clear from the following detailed description of a preferred embodiment thereof, given with reference to the appended drawings which are provided purely by way of non-limiting example and in which:
- Fig. 1 is a diagrammatic front perspective view of a significant portion of a winter tyre not in accordance with the present invention;
- Fig. 2 is a diagrammatic view, on an enlarged scale and in perspective, of a block portion of the tyre of Fig. 1 bearing a sipe;
- Fig. 3 is a view, on an enlarged scale and in perspective, of a block portion of Fig. 2;
- Fig. 4 is a top view, on an enlarged scale, of a block portion bearing a sipe obtained in accordance with a variant of the embodiment of the tyre of Fig. 1, and in accordance with the present invention.

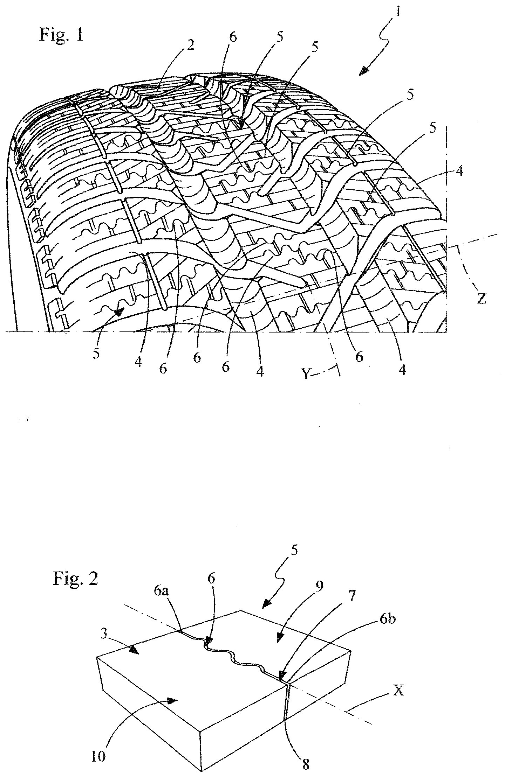

With reference initially to Figs. 1 to 3, a tyre not in accordance with the present invention is shown overall by 1.

Tyre 1 preferably comprises a carcass structure disposed in a toroidal manner about an axis Z, a belt structure disposed in a radially external position with respect to said carcass structure, and a tread band 2 disposed in a radially external position with respect to said belt structure and on which a tread surface 3, defined as the radially external surface of the tread band 2, is formed, which surface is designed to come into contact with a road surface on which said tyre 1 is intended to roll.

The tread band 2 is provided with a plurality of grooves, all shown generically by 4, delimiting a plurality of blocks 5 disposed in sequence in a circumferential direction Y of the tread band 2.

One or a plurality of sipes 6 are provided on each block 5 and extend in a longitudinal direction X which, in the preferred embodiment described here, is inclined both with respect to the axial direction Z and the circumferential direction Y as defined.

It will be appreciated that alternative embodiments, in which the shape of the blocks 5 and the arrangement of the sipes 6 are configured differently on the tread band in order to meet particular operating requirements, may be readily obtained by a person skilled in the art.

Each sipe 6 preferably opens, at its opposite longitudinal ends 6a, 6b, into a pair of grooves 4 delimiting the block 5, so as to extend through said block from side to side.

Each sipe 6 further extends between a top 7 of the sipe, open on the tread surface 3, and a bottom 8 of the sipe, radially internal of the tread band 2, and defines a first and a second block portion, shown by 9 and 10 respectively, separated from one another by the sipe 6 and spaced by a distance which is substantially constant along the development of the sipe 6.

Each block portion 9, 10 in particular comprises a first surface 11 facing the other block portion and extending from the top 7 to an intermediate depth P defined in the sipe 6 between the top 7 and the bottom 8, and a second surface 12 also facing the other block portion, connected to the first surface 11 and extending from the intermediate depth P to the bottom 8 of the sipe 6.

The second surface 12 is substantially flat and therefore has a substantially straight profile.

In contrast, the first surface 11 has an undulating profile and comprises a series of concave portions 13 and convex portions 14 arranged symmetrically on opposite sides with respect to a reference plane A comprising the second surface 11, preferably coincident with a radial plane of the tyre 1.

A respective crest 13a, 14a is defined on each concave portion 13 and convex portion 14, whose distance from the reference plane A decreases progressively in a linear manner from the top 7 to the intermediate depth P, where this distance becomes zero.

Concave portions 13 and convex portions 14 are shaped such that when the first surface 11 is sectioned by any plane incident thereto, a substantially sinusoidal line is obtained.

As a result of the progressive closing up of the concave and convex portions towards the reference plane A, the sinusoids obtained at different distances from the top 7 have the same wavelength but an increasingly lower amplitude as they approach the intermediate depth P where the sinusoid becomes similar to a straight line.

The highest amplitude of the sinusoid is obtained at the top 7 of the sipe where the distance of the crests 13a and 14a from the reference plane A is between approximately 0.5 mm and approximately 2 mm, preferably between approximately 1 mm and approximately 1.5 mm.

The intermediate depth P is preferably spaced from the top 7 by approximately 1.5 mm and approximately 10 mm and from the bottom 8 by approximately 2.5 mm and approximately 5 mm. The intermediate depth P is more preferably spaced from the top 7 by approximately 2 mm and approximately 6 mm and from said bottom 8 by approximately 4 mm.

The first surface 11 extends in the longitudinal direction X over a distance of between approximately 50% and approximately 100% of the entire longitudinal extent of the sipe 6, any remaining part of its extent being equally divided between the flat surfaces 16 and 17.

The first surface 11 is preferably defined in a central region of the sipe 6 and is interposed between flat surfaces 16, 17 which are formed at the opposite longitudinal ends 6a, 6b of the sipe 6 in a manner coplanar with the second surface 12.

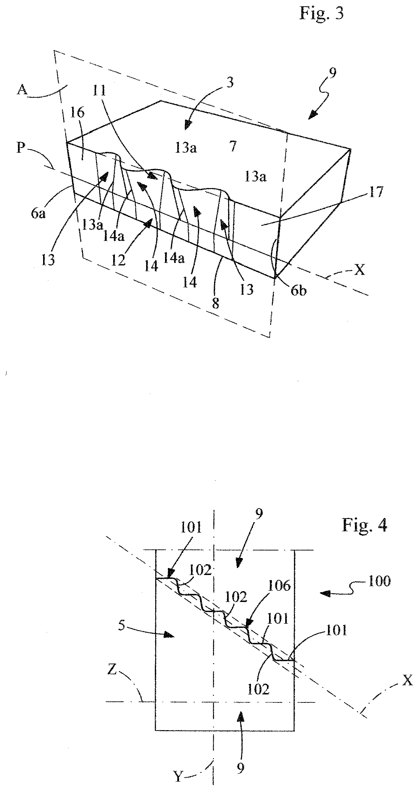

Fig. 4 shows a variant of the tyre 1, shown overall by 100, in diagrammatic form, realised in accordance with the present invention.

Details similar to the embodiment described above bear the same reference numerals.

The tyre 100 differs from the tyre 1 as a result of the different shape of the undulating profile of the sipe, shown in this case by 106.

The sipe 106 differs from the sipe 6 in that the first surface 11 defines, when the first surface 11 is sectioned by any plane incident thereto, a polygonal chain in the form of a zigzag line which can be clearly seen in the top view of Fig. 4 where the profile of the surface 11 is sectioned by the tread surface 3.

The first surface 11 is shaped such that said polygonal chain in the form of a zigzag line comprises an alternating series of first and second straight sections, shown by 101 and 102 respectively, which are connected together such that said polygonal chain has rounded apexes.

The first and second straight sections 101, 102 extend in an almost parallel manner with respect to the axial direction Z and the circumferential direction Y defined in the tyre. Moreover, all first sections 101 have a substantially constant extension, for instance of between approximately 1.5 mm and approximately 10 mm, preferably between approximately 2 mm and approximately 6 mm, in the same way as all second sections 102. In this way, the sipe 6 may extend in a straight longitudinal direction X inclined by approximately 45° with respect to the circumferential direction Y and the axial direction Z. By varying the ratio between the extensions of the first and second sections 101, 102 in a different manner, sipes are obtained which extend in longitudinal directions having different degrees of inclination with respect to the axial direction Z and the circumferential direction Y.

## Claims

1. A winter tyre comprising a tread band (2) in which is formed a plurality of grooves (4), at least one block (5) delimited by said plurality of grooves, at least one sipe (6) formed in said at least one block and extending between a top (7) of said sipe which opens in a tread surface (3) radially external of said tread band and a bottom (8) of said sipe radially internal of said tread band, said at least one sipe being shaped so as to define in each of the block portions (9, 10) that are separated by said sipe:
- a first surface (11) which faces the other block portion and extends from said top (7) to an intermediate depth (P) that is defined in said sipe between said top and said bottom (8), and has an undulating profile, and
- a second surface (12) which faces the other block portion, is connected to said first surface (11), extends from said intermediate depth (P) to said bottom (8), and has a substantially straight profile,
wherein said undulating profile defines a polygonal chain in form of a zigzag line when said first surface (11) is sectioned by an incident plane, said tyre being **characterised in that** said polygonal chain in the form of a zigzag line comprises an alternating series of respective first straight portions (101) and second straight portions (102) which are substantially parallel, respectively, to an axial direction (Z) and to a circumferential direction (Y) that are defined in said tread band (2).

2. A winter tyre according to claim 1, wherein said sipe (6) extends in said block in a longitudinal direction (X) which is parallel to a plane tangential to said tread surface (2) and is inclined with respect both to an axial direction (Z) and to a circumferential direction (Y) that are defined in said tread band (2).

3. A winter tyre according to any one of the preceding claims, wherein said sipe (6) opens, at its opposite longitudinal ends (6a, 6b), into a pair of grooves delimiting said block, so as to extend through said block from side to side.

4. A winter tyre according to any one of the preceding claims, wherein said first surface (11) is defined, in the longitudinal direction, in a central region of said sipe and is interposed between flat surfaces (16, 17) which are formed at the opposite longitudinal ends (6a, 6b) of said sipe.

5. A winter tyre according to claim 4, wherein said flat surfaces (16, 17) are coplanar with said second surface (12).

6. A winter tyre according to any one of the preceding claims, wherein said sipe (6) extends in said block in a longitudinal direction (X) parallel to a plane tangential to said tread surface (3), said first surface (11) comprising a series of concave portions (13) and convex portions (14) each of which has a respective crest (13a; 14a) the distance of which from a reference plane (A) comprising said second surface (12) decreases progressively from said top (7) to said intermediate depth (P).

7. A winter tyre according to claim 6, wherein, for each of said concave portions (13) and of said convex portions (14), the distance of said crest (13a; 14a) from said reference plane (A) is zero at said intermediate depth (P).

8. A winter tyre according to claim 6 or claim 7, wherein, for each of said concave portions (13) and of said convex portions (14), the distance of said crest (13a; 14a) from said reference plane (A) decreases linearly from said top (7) to said intermediate depth (P).

9. A winter tyre according to any one of claims 6 to 8, wherein said concave portions (13) and said convex portions (14) are arranged on opposite sides of said reference plane (A).

10. A winter tyre according to claim 9, wherein said concave portions (13) and said convex portions (14) are arranged symmetrically with respect to said reference plane (A).

11. A winter tyre according to any one of the preceding claims, wherein said intermediate depth (P) is spaced from said top (7) by between approximately 1.5 mm and approximately 10 mm.

12. A winter tyre according to any one of the preceding claims, wherein said intermediate depth (P) is spaced from said bottom (8) by between approximately 2.5 mm and approximately 5 mm.

13. A winter tyre according to claim 12, wherein said intermediate depth (P) is spaced from said bottom (8) by approximately 4 mm.

14. A winter tyre according to any one of the preceding claims, wherein said sipe (6) extends in said block in a longitudinal direction (X) and said first surface (11) extends in said longitudinal direction (X) for a distance of between approximately 50% and approximately 100% of the entire longitudinal extent of said sipe (6).

## Patentansprüche

1. Winterreifen, umfassend ein Profilband (2), in welchem eine Mehrzahl von Rillen (4) ausgebildet ist, mindestens einen Block (5), der durch die Mehrzahl von Rillen begrenzt ist, mindestens eine Lamelle (6), die in dem mindestens einen Block ausgebildet ist und sich zwischen einem oberen Ende (7) der Lamelle, das sich in eine Profiloberfläche (3) radial außerhalb des Profilbandes öffnet, und einem unteren Ende (8) der Lamelle radial innerhalb des Profilbandes erstreckt, wobei die mindestens eine Lamelle so geformt ist, dass sie in jedem der Blockabschnitte (9, 10), die durch die Lamelle getrennt sind, Folgendes definiert:
- eine erste Fläche (11), die dem anderen Blockabschnitt zugewandt ist, sich vom oberen Ende (7) bis zu einer mittleren Tiefe (P) erstreckt, die in der Lamelle zwischen dem oberen Ende und dem unteren Ende (8) definiert ist, und ein Wellenprofil aufweist, und
- eine zweite Fläche (12), die dem anderen Blockabschnitt zugewandt ist, mit der ersten Fläche (11) verbunden ist, sich von der mittleren Tiefe (P) zum unteren Ende (8) erstreckt und ein im Wesentlichen gerades Profil aufweist,
wobei das Wellenprofil eine polygonale Kette in Form eine Zickzacklinie definiert, wenn die erste Fläche (11) von einer Einfallsebene geschnitten wird, wobei der Reifen **dadurch gekennzeichnet ist, dass** die polygonale Kette in Form einer Zickzacklinie eine abwechselnde Reihe von jeweiligen ersten geraden Abschnitten (101) und zweiten geraden Abschnitten (102) umfasst, die im Wesentlichen parallel zu einer axialen Richtung (Z) bzw. zu einer Umfangsrichtung (Y) sind, die im Profilband (2) definiert sind.

2. Winterreifen nach Anspruch 1, wobei die Lamelle (6) sich im Block in einer Längsrichtung (X) erstreckt, die parallel zu einer Ebene tangential zur Profiloberfläche (2) und sowohl in Bezug auf eine axiale Richtung (Z) als auch auf eine Umfangsrichtung (Y), die im Profilband (2) definiert sind, geneigt ist.

3. Winterreifen nach einem der vorhergehenden Ansprüche, wobei die Lamelle (6) sich an ihren gegenüberliegenden Längsenden (6a, 6b) in ein Paar von Rillen öffnet, die den Block begrenzen, um sich von Seite zu Seite durch den Block zu erstrecken.

4. Winterreifen nach einem der vorhergehenden Ansprüche, wobei die erste Fläche (11) in der Längsrichtung in einer mittigen Region der Lamelle definiert und zwischen flachen Flächen (16, 17), die an den gegenüberliegenden Längsenden (6a, 6b) der Lamelle ausgebildet sind, eingefügt ist.

5. Winterreifen nach Anspruch 4, wobei die flachen Flächen (16, 17) koplanar mit der zweiten Fläche (12) sind.

6. Winterreifen nach einem der vorhergehenden Ansprüche, wobei die Lamelle (6) sich im Block in einer Längsrichtung (X) parallel zu einer Ebene tangential zur Profiloberfläche (3) erstreckt, die erste Fläche (11) eine Reihe von konkaven Abschnitten (13) und konvexen Abschnitten (14) umfasst, die jeweils einen jeweiligen Scheitel (13a; 14a) aufweisen, dessen Distanz von einer Bezugsebene (A), welche die zweite Fläche (12) umfasst, vom oberen Ende (7) zur mittleren Tiefe (P) schrittweise abnimmt.

7. Winterreifen nach Anspruch 6, wobei für jeden der konkaven Abschnitte (13) und der konvexen Abschnitte (14) die Distanz des Scheitels (13a, 14a) von der Bezugsebene (A) bei der mittleren Tiefe (P) null beträgt.

8. Winterreifen nach Anspruch 6 oder 7, wobei für jeden der konkaven Abschnitte (13) und der konvexen Abschnitte (14) die Distanz des Scheitels (13a, 14a) von der Bezugsebene (A) vom oberen Ende (7) zur mittleren Tiefe (P) linear abnimmt.

9. Winterreifen nach einem der Ansprüche 6 bis 8, wobei die konkaven Abschnitte (13) und die konvexen Abschnitte (14) auf gegenüberliegenden Seiten der Bezugsebene (A) angeordnet sind.

10. Winterreifen nach Anspruch 9, wobei die konkaven Abschnitte (13) und die konvexen Abschnitte (14) hinsichtlich der Bezugsebene (A) symmetrisch angeordnet sind.

11. Winterreifen nach einem der vorhergehenden Ansprüche, wobei die mittlere Tiefe (P) ungefähr 1,5 mm bis ungefähr 10 mm vom oberen Ende (7) beabstandet ist.

12. Winterreifen nach einem der vorhergehenden Ansprüche, wobei die mittlere Tiefe (P) ungefähr 2,5 mm bis ungefähr 5 mm vom unteren Ende (8) beabstandet ist.

13. Winterreifen nach Anspruch 12, wobei die mittlere Tiefe (P) ungefähr 4 mm vom unteren Ende (8) beabstandet ist.

14. Winterreifen nach einem der vorhergehenden Ansprüche, wobei die Lamelle (6) sich im Block in einer Längsrichtung (X) erstreckt, und die erste Fläche (11) sich eine Distanz von ungefähr 50 % bis ungefähr 100 % der gesamten Längenausdehnung der Lamelle (6) in der Längsrichtung (X) erstreckt.

## Revendications

1. Pneu d'hiver comprenant une bande de roulement (2) dans laquelle sont formés une pluralité de rainures (4), au moins un bloc (5) délimité par ladite pluralité de rainures, au moins une lamelle (6) formée dans ledit au moins un bloc et s'étendant entre une partie supérieure (7) de ladite lamelle qui débouche dans une surface de roulement (3) radialement externe de ladite bande de roulement et une partie inférieure (8) de ladite lamelle radialement interne de ladite bande de roulement, ladite au moins une lamelle étant conformée de manière à définir dans chacune des parties de bloc (9, 10) qui sont séparées par ladite lamelle :
- une première surface (11) qui fait face à l'autre partie de bloc et s'étend de ladite partie supérieure (7) jusqu'à une profondeur intermédiaire (P) qui est définie dans ladite lamelle entre ladite partie supérieure et ladite partie inférieure (8), et présente un profil ondulé, et
- une deuxième surface (12) qui fait face à l'autre partie de bloc, est reliée à ladite première surface (11), s'étend de ladite profondeur intermédiaire (P) jusqu'à ladite partie inférieure (8), et présente un profil sensiblement droit,
dans lequel ledit profil ondulé définit une chaîne polygonale en forme de ligne en zigzag lorsque ladite première surface (11) est sectionnée par un plan incident, ledit pneu étant **caractérisé en ce que** ladite chaîne polygonale en forme de ligne en zigzag comprend une série alternée de premières parties droites (101) et de deuxièmes parties droites (102) respectives qui sont sensiblement parallèles, respectivement, à une direction axiale (Z) et à une direction circonférentielle (Y) qui sont définies dans ladite bande de roulement (2).

2. Pneu d'hiver selon la revendication 1, dans lequel ladite lamelle (6) s'étend dans ledit bloc dans une direction longitudinale (X) qui est parallèle à un plan tangent à ladite surface de roulement (2) et est inclinée, à la fois, par rapport à un une direction axiale (Z) et par rapport à une direction circonférentielle (Y) qui sont définies dans ladite bande de roulement (2).

3. Pneu d'hiver selon l'une quelconque des revendications précédentes, dans lequel ladite lamelle (6) débouche, au niveau de ses extrémités longitudinales opposées (6a, 6b), dans une paire de rainures délimitant ledit bloc, de manière à s'étendre à travers ledit bloc d'un côte à l'autre.

4. Pneu d'hiver selon l'une quelconque des revendications précédentes, dans lequel ladite première surface (11) est définie, dans la direction longitudinale, dans une région centrale de ladite lamelle et est interposée entre des surfaces planes (16, 17) qui sont formées au niveau des extrémités longitudinales opposées (6a, 6b) de ladite lamelle.

5. Pneu d'hiver selon la revendication 4, dans lequel lesdites surfaces planes (16, 17) sont coplanaires avec ladite deuxième surface (12).

6. Pneu d'hiver selon l'une quelconque des revendications précédentes, dans lequel ladite lamelle (6) s'étend dans ledit bloc dans une direction longitudinale (X) parallèle à un plan tangent à ladite surface de roulement (3), ladite première surface (11) comprenant une série de parties concaves (13) et de parties convexes (14) dont chacune a une crête respective (13a ; 14a) dont la distance par rapport à un plan de référence (A) comprenant ladite deuxième surface (12) diminue progressivement de ladite partie supérieure (7) à ladite profondeur intermédiaire (P) .

7. Pneu d'hiver selon la revendication 6, dans lequel, pour chacune desdites parties concaves (13) et desdites parties convexes (14), la distance de ladite crête (13a ; 14a) par rapport audit plan de référence (A) est nulle au niveau de ladite profondeur intermédiaire (P).

8. Pneu d'hiver selon la revendication 6 ou 7, dans lequel, pour chacune desdites parties concaves (13) et desdites parties convexes (14), la distance de ladite crête (13a ; 14a) par rapport dudit plan de référence (A) diminue de manière linéaire de ladite partie supérieure (7) à ladite profondeur intermédiaire (P).

9. Pneu d'hiver selon l'une quelconque des revendications 6 à 8, dans lequel lesdites parties concaves (13) et lesdites parties convexes (14) sont agencées sur des côtés opposés dudit plan de référence (A).

10. Pneu d'hiver selon la revendication 9, dans lequel lesdites parties concaves (13) et lesdites parties convexes (14) sont agencées de manière symétrique par rapport audit plan de référence (A).

11. Pneu d'hiver selon l'une quelconque des revendications précédentes, dans lequel ladite profondeur intermédiaire (P) est espacée de ladite partie supérieure (7) d'une distance comprise entre environ 1,5 mm et environ 10 mm.

12. Pneu d'hiver selon l'une quelconque des revendications précédentes, dans lequel ladite profondeur intermédiaire (P) est espacée de ladite partie inférieure (8) d'une distance comprise entre environ 2,5 mm et environ 5 mm.

13. Pneu d'hiver selon la revendication 12, dans lequel ladite profondeur intermédiaire (P) est espacée de ladite partie inférieure (8) d'environ 4 mm.

14. Pneu d'hiver selon l'une quelconque des revendications précédentes, dans lequel ladite lamelle (6) s'étend dans ledit bloc dans une direction longitudinale (X) et ladite première surface (11) s'étend dans ladite direction longitudinale (X) sur une distance comprise entre environ 50% et environ 100% de toute l'étendue longitudinale de ladite lamelle (6).
